# FASCICULE DE BREVET EUROPEEN

(11) **EP 3 301 335 B1**
(45) Date de publication et mention de la délivrance du brevet: **17.07.2019**
(21) Numéro de dépôt: 17189612.9
(22) Date de dépôt: 06.09.2017
(51) Int. Cl.: F16K 31/40, F16K 11/07, F16K 31/42, B64D 47/00, F15B 13/04

(54) **VANNE FLUIDIQUE**
FLÜSSIGKEITSVENTIL
FLUID VALVE

(30) Priorité: 30.09.2016 BE 201605728
(43) Date de publication de la demande: 04.04.2018
(73) Titulaire: Safran Aero Boosters SA, 4041 Herstal (BE)
(72) Inventeur: FRIPPIAT, Cédric, 4910 Theux (BE); BOMAL, Jean-Christian, 4633 Melen (BE); PAULUS, Nicolas, B 4261 Latinne (BE)
(74) Mandataire: Gevers Patents

(56) Documents cités:
- EP-A1- 2 503 201
- EP-A1- 3 128 215
- GB-A- 2 304 839
- US-A- 3 722 547
- US-A- 4 245 671
- US-A1- 2009 224 192
- US-A1- 2010 301 248
- US-A1- 2013 312 843

## Description

### Domaine technique

L'invention se rapporte à une vanne fluidique, par exemple à trois voies.

### Art antérieur

Le document GB 2343935 décrit une vanne fluidique comprenant un membre de vanne et un actuateur. Un déplacement de l'actuateur induit un déplacement du membre de vanne de façon à contrôler un flux de fluide à travers la vanne fluidique. Le membre de vanne est fixé à un ressort. Lorsque, à cause des déplacements du membre de vanne, le ressort quitte sa position d'équilibre, une force de rappel tend à le rappeler vers sa position d'équilibre, entraînant avec lui le membre de vanne.

Un problème de la vanne fluidique décrite dans le document GB 2343935 est que la force de rappel qui s'exerce sur le membre de vanne augmente avec l'écart à la position d'équilibre du ressort. Donc, cette force de rappel augmente au fur et à mesure du déplacement du membre de vanne. Cette variation de la force de rappel en fonction de la position du membre de vanne détériore le contrôle de l'actuateur sur la position du membre de vanne, en particulier lorsque le déplacement du membre de vanne est grand.

Le document US3722547 A décrit une vanne fluidique dans laquelle un piston de fonctionnement a une extrémité présentant un trou axial qui reçoit un piton pilote. Il est décrit que la position sélectionnée du piston de fonctionnement est maintenue en contrebalançant la pression fluidique agissant sur une partie du piston.

Le document US4245671 A décrit une vanne opérée par pilote de solénoïde et utilisant un ensemble bobine / piston qui est actionné par la pression de fluide dans une chambre pilote. Il est décrit qu'un piston est monté coulissant sur une ou les deux extrémités d'une bobine et peut être ramené à sa position initiale en modifiant la pression dans la chambre pilote.

Le document EP3128215 relève de l'article 54(3) CBE. Il divulgue une vanne fluidique pour contrôler un débit de fluide entre une entrée et une sortie et comprenant : un corps de vanne creux ; un actionneur électrique comprenant un pilote; un membre de vanne pour obturer au moins partiellement un passage entre une entrée et une sortie de ladite vanne fluidique. Le membre de vanne définit une première et une deuxième cavités dans le corps de vanne creux. Le corps de vanne creux comprend une communication vers une pression de référence. La vanne fluidique est configurée de sorte qu'un déplacement dudit pilote induise une variation de pression dans une cavité pour créer une force de déplacement sur le membre de vanne.

### Résumé de l'invention

Un des buts de l'invention est de fournir une vanne fluidique telle que la force de rappel s'exerçant sur son membre de vanne est indépendante de la position du membre de vanne. A cet effet, l'invention propose une vanne fluidique pour un circuit hydraulique d'un équipement d'un aéronef et comprenant :
- un corps de vanne creux comprenant une entrée, deux sorties et une première communication vers une première pression;
- un actionneur situé au moins partiellement dans le creux du corps de vanne creux et comprenant un pilote mobile;
- un membre de vanne mobile dans le corps de vanne pour obturer au moins partiellement un passage entre ladite entrée et une des deux sorties, ledit membre de vanne définissant au moins partiellement une première et une deuxième cavités situées de part et d'autre dudit membre de vanne dans le creux du corps de vanne, ledit membre de vanne comprenant un trou longitudinal pour mettre en communication lesdites première et deuxième cavités lorsqu'il n'est pas obturé et ledit pilote étant apte à obturer au moins partiellement une première ouverture dudit trou longitudinal, la deuxième cavité étant prévue pour être connectée fluidiquement à une deuxième pression à l'aide d'une deuxième communication,
- un piston ayant une première partie et une deuxième partie, la première partie étant couplée mécaniquement audit membre de vanne dans la deuxième cavité et la deuxième partie étant située au moins partiellement dans une troisième cavité et ayant une partie surface au moins partiellement perpendiculaire à une direction de déplacement du piston, la troisième cavité étant prévue pour être connectée fluidiquement à une troisième pression à l'aide d'une troisième communication; et
- une restriction fixe dans ladite première communication de sorte qu'un déplacement dudit pilote mobile induise une variation de pression dans la première cavité pour créer une force de déplacement sur ledit membre de vanne pour faire varier un débit de fluide entre l'entrée et les deux sorties.

Dans la vanne fluidique selon l'invention, la pression régnant dans le trou longitudinal est égale à la pression régnant dans la deuxième cavité. Un déplacement du pilote agrandit ou rétrécit la communication fluidique entre le trou longitudinal et la première cavité. Par conséquent, ce déplacement modifie la pression régnant dans la première cavité. En d'autres termes, un déplacement du pilote modifie la différence de pression entre les première et deuxième cavités. Cette différence de pression donne naissance à une force de déplacement sur le membre de vanne. Si cette force est suffisante par rapport à la force de rappel s'exerçant sur le membre de vanne, elle permet de déplacer le membre de vanne.

Dans la vanne fluidique selon l'invention, la pression régnant dans la deuxième cavité crée une force sur le membre de vanne et sur la première partie du piston, et la pression régnant dans la troisième cavité crée une force sur la deuxième partie du piston puisque la deuxième partie du piston a une surface sur laquelle cette pression peut s'exercer.

Par conséquent, la force de rappel sur le membre de vanne est due à la résultante de ces deux forces. Comme la deuxième cavité est connectée à une deuxième pression et la troisième cavité est connectée à une troisième pression, les pressions régnant dans les deuxième et troisième cavités sont indépendantes de la position du membre de vanne. Par conséquent, la résultante des forces est indépendante de la position du membre de vanne.

La vanne fluidique selon l'invention peut être dite "à rétroaction hydraulique".

Les communications permettent de relier de manière fluidique les cavités à des cavités externes comprenant des fluides à une pression donnée ou pression de référence. Chaque communication peut relier une cavité à une même pression externe ou à des pressions externes différentes.

La première, la deuxième et la troisième pressions sont préférentiellement des pressions externes. La première, la deuxième et la troisième communications sont préférentiellement situées au moins partiellement dans le corps de vanne. La troisième pression est préférentiellement différente de la deuxième pression. La troisième pression est préférentiellement supérieure à la deuxième pression. La troisième pression est préférentiellement égale à la première pression. Préférentiellement, la deuxième communication ne comprend pas de restriction fixe. La pression régnant dans la deuxième cavité est préférentiellement égale à la deuxième pression. Préférentiellement, la troisième communication ne comprend pas de restriction fixe. La pression régnant dans la troisième cavité est préférentiellement égale à la troisième pression.

La première partie du piston est préférentiellement fixée au membre de vanne.

L'actionneur de la vanne fluidique de l'invention peut être qualifié d'immergé. Ainsi, si la vanne fluidique de l'invention permet de contrôler un débit d'huile, l'actionneur est immergé dans de l'huile quand la vanne fluidique est en fonctionnement.

Le pilote est parfois appelé plongeur par un homme du métier.

Le terme 'restriction fixe' est connu d'un homme du métier. Différents types de restriction fixe peuvent être envisagés. Un exemple non limitatif est un orifice circulaire percé dans une paroi dont l'épaisseur est du même ordre de grandeur que son diamètre. D'autres exemples sont un coude, un rétrécissement de diamètre.

La vanne fluidique de l'invention est une vanne proportionnelle, terme connu de l'homme du métier. En conséquence, on arrive à contrôler le passage entre l'entrée et chacune des deux sorties sur toute la plage de course du membre de vanne. La vanne de l'invention n'est donc pas simplement une vanne ON-OFF. Avec la vanne de l'invention, il y a une infinité de positions stables pour le membre de vanne : elle permet donc un réel contrôle du débit de fluide entre l'entrée et les deux sorties. La vanne fluidique de l'invention n'est pas du type 'Direct Drive'.

Les termes 'entrée' et 'sorties' du corps de vanne creux pourraient être inter changés. Cela n'est en effet fonction que du sens d'écoulement du fluide dont le débit est contrôlé par la vanne de l'invention. Ainsi, le corps de vanne pourrait contenir deux entrées et une sortie. De même, le corps de vanne pourrait comprend plus qu'une entrée et plus que deux sorties.

Le membre de vanne n'est préférentiellement pas fixé à un ressort.

La communication fluidique entre la première ouverture du trou longitudinal du membre de vanne et la première cavité peut par exemple être directe, c'est-à-dire que la première ouverture du trou longitudinal débouche dans la première cavité. La communication fluidique entre la première ouverture du trou longitudinal du membre de vanne et la première cavité peut être indirecte, par exemple se faire via une communication intermédiaire qui peut être un évidement dans le membre de vanne.

Selon un mode de réalisation possible de l'invention, le piston comprend un canal mettant en communication fluidique la deuxième cavité et le trou longitudinal du membre de vanne. Ce canal permet que la pression régnant dans le trou longitudinal soit égale à la pression régnant dans la deuxième cavité, même si le piston est fixé au membre de vanne tout autour du trou longitudinal. Par exemple, si la deuxième cavité est à la deuxième pression, le trou longitudinal aussi.

Selon un mode de réalisation possible de l'invention, la troisième cavité est située dans le creux du corps de vanne. Cela permet de rendre la vanne fluidique particulièrement solide.

Selon un mode de réalisation possible de l'invention, l'actionneur est un actionneur électrique solénoïde et le pilote est ferromagnétique.

Selon un mode de réalisation possible de l'invention, la première communication débouche dans la première cavité. Cela permet que la pression régnant dans la première cavité dépende notamment de la première pression.

Selon un mode de réalisation possible de l'invention, le membre de vanne comprend un évidement recevant une partie du pilote, une paroi dudit évidement étant agencée pour limiter au moins partiellement un déplacement du pilote. La paroi de l'évidement fait ainsi office de buttoir pour le pilote. Cela permet de limiter les mouvements du pilote par rapport au membre de vanne, et donc d'augmenter la solidité mécanique de la vanne fluidique. La première ouverture du trou longitudinal débouche préférentiellement dans l'évidement du membre de vanne. L'évidement du membre de vanne est préférentiellement en communication fluidique avec la première cavité, de façon à ce que les première et deuxième cavités soient en communication fluidique via le trou longitudinal lorsque la première ouverture du trou longitudinal n'est pas obturée par le pilote.

Selon un mode de réalisation possible de l'invention, la paroi et le pilote sont agencés pour qu'un déplacement dudit pilote vers une direction opposée à la deuxième cavité puisse entraîner mécaniquement un déplacement du membre de vanne. La paroi est de préférence située à l'opposé de l'extrémité du pilote qui permet de fermer le trou longitudinal. Ainsi, si le pilote est actionné de façon à s'éloigner de la deuxième cavité, il entre en contact avec la paroi et la pousse en l'éloignant de la deuxième cavité. En d'autres termes, le pilote tire la paroi et donc le membre de vanne dans une direction opposée à la deuxième cavité.

Selon un mode de réalisation possible de l'invention, la vanne fluidique comprend un ressort reliant ledit pilote à une paroi située à l'opposé du pilote par rapport au membre de vanne. Cette paroi est par exemple une paroi de la quatrième cavité. Cette paroi est par exemple une paroi du creux du corps de vanne.

Selon un mode de réalisation possible de l'invention, le pilote est prévu pour coulisser dans un conduit permettant de mettre en communication fluidique la première et une quatrième cavités. La quatrième cavité est préférentiellement située dans le creux du corps de vanne. Le conduit est préférentiellement situé au moins partiellement dans le creux du corps de vanne.

Selon un mode de réalisation possible de l'invention, la quatrième cavité est prévue pour être connectée fluidiquement à une quatrième pression à l'aide d'une quatrième communication. La quatrième pression est préférentiellement une pression externe. La quatrième pression peut être égale à la deuxième pression. La quatrième pression est préférentiellement différente de la pression régnant dans la première cavité. La quatrième communication est préférentiellement située au moins partiellement dans le creux du corps de vanne. Préférentiellement, la quatrième communication ne comprend pas de restriction fixe. La pression régnant dans la quatrième cavité est préférentiellement égale à la quatrième pression.

Selon un mode de réalisation possible de l'invention, le pilote est agencé pour subir de la part d'un fluide présent dans la première cavité une force l'éloignant du membre de vanne. Cela permet qu'un déplacement du pilote induise une variation de pression créant sur le pilote une force de sens opposé audit déplacement.

Selon un mode de réalisation possible de l'invention, le pilote est agencé pour subir de la part d'un fluide présent dans la première cavité une force dirigée vers le membre de vanne. Cela permet qu'un déplacement du pilote induise une variation de pression créant sur le pilote une force de même sens que ledit déplacement.

Selon un mode de réalisation possible de l'invention, le pilote est agencé pour ne pas subir de la part d'un fluide présent dans la première cavité de force le rapprochant ou l'éloignant du membre de vanne. Cela permet qu'un déplacement du pilote induise une variation de pression ne créant pas sur le pilote de force tendant à refermer ou à libérer la première ouverture du trou longitudinal.

Les inventeurs proposent également un circuit hydraulique d'un équipement d'un aéronef (par exemple circuit hydraulique d'un train d'atterrissage), un système de pile à combustible, une turbomachine et un aéronef comprenant une ou plusieurs vannes fluidiques selon l'invention.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 montre un mode de réalisation possible de la vanne fluidique de l'invention;
- la figure 2a montre une vue rapprochée d'un pilote selon un premier mode de réalisation de pilote pouvant être utilisé dans un mode de réalisation possible de la vanne fluidique de l'invention;
- la figure 2b montre une vue rapprochée d'un pilote selon un deuxième mode de réalisation de pilote pouvant être utilisé dans un mode de réalisation possible de la vanne fluidique de l'invention;
- la figure 2c montre une vue rapprochée d'un pilote selon un troisième mode de réalisation de pilote pouvant être utilisé dans un mode de réalisation possible de la vanne fluidique de l'invention;
- la figure 3 montre un mode de réalisation possible de la vanne fluidique de l'invention, dans lequel elle comprend un pilote selon le deuxième mode de réalisation de pilote; et
- la figure 4 montre une vanne fluidique comprenant un pilote selon le deuxième mode de réalisation de pilote.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

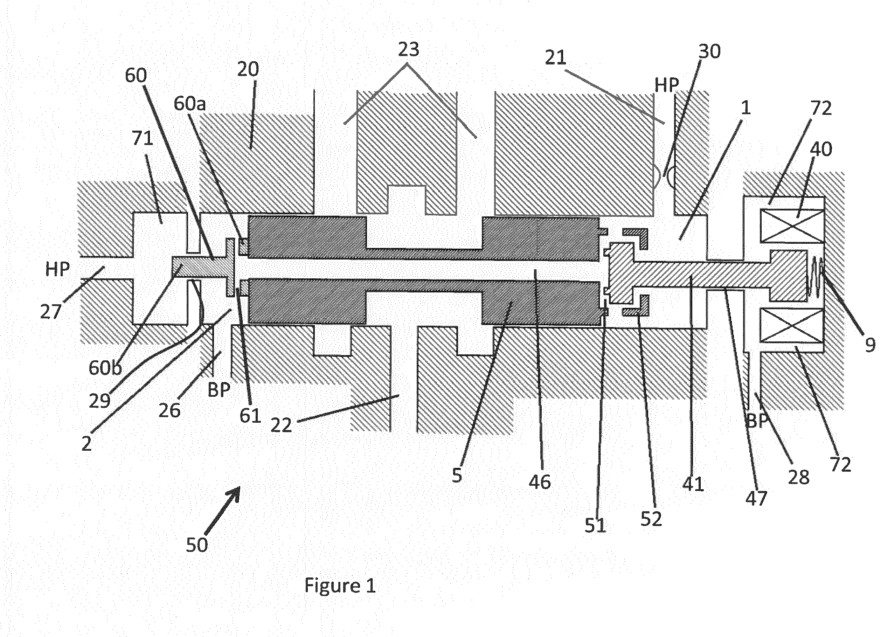

La figure 1 montre un mode de réalisation possible d'une vanne fluidique 50 de l'invention. La vanne fluidique 50 comprend un corps de vanne 20 creux comprenant une entrée 22, deux sorties 23 et une première communication 21 vers une première pression, par exemple une haute pression HP. La première communication 21 comprend une restriction fixe 30.

La vanne fluidique 50 comprend en outre un actionneur 40 situé au moins partiellement dans le creux du corps de vanne 20 creux et comprenant un pilote 41 mobile. Préférentiellement, l'actionneur 40 est un actionneur électrique solénoïde et le pilote 41 est ferromagnétique. L'actionneur 40 peut être un autre type d'actionneur.

La vanne fluidique 50 comprend en outre un membre de vanne 5 mobile dans le corps de vanne 20. Le membre de 5 permet d'obturer au moins partiellement un passage entre l'entrée 22 et une des deux sorties 23. Le membre de vanne 5 définit au moins partiellement une première 1 et une deuxième 2 cavités situées de part et d'autre du membre de vanne 5, dans le creux du corps de vanne 20.

La première communication 21 est préférentiellement connectée fluidiquement à la première cavité 1. La première communication 21 est préférentiellement au moins partiellement dans le corps de vanne 20.

Le membre de vanne 5 comprend un trou longitudinal 46 mettant en communication fluidique directe ou indirecte les première 1 et deuxième 2 cavités lorsqu'il n'est pas obturé. Le trou longitudinal 46 débouche préférentiellement par une première ouverture vers la première cavité 1 ou dans la première cavité 1. Le pilote 41 est apte à obturer au moins partiellement la première ouverture du trou longitudinal 46. Le pilote 41 est préférentiellement situé au moins partiellement dans la première cavité 1.

Selon un mode de réalisation de l'invention, le membre de vanne 5 comprend un évidement 51 recevant une partie du pilote 41, en particulier la partie du pilote 41 qui permet d'obturer la première ouverture du trou longitudinal 46. Une paroi 52 de l'évidement 51 est agencée pour limiter au moins partiellement un déplacement du pilote 41. L'évidement 51 est en communication fluidique avec la première cavité 1, de sorte que l'obturation ou la libération de la première ouverture du trou longitudinal 46 par le pilote 41 influence la pression régnant dans l'évidement 51 du membre de vanne 5 et par conséquent la pression régnant dans la première cavité 1.

De préférence, la vanne 50 est agencée pour que le pilote 41 puisse entrainer la paroi 52 et donc le membre de vanne 5 en direction de la première cavité 1.

La deuxième cavité 2 est connectée fluidiquement à une deuxième pression, par exemple une pression BP externe, à l'aide d'une deuxième communication 26. Préférentiellement, la deuxième communication 26 permet que la deuxième pression règne dans la deuxième cavité 2.

La vanne fluidique 50 comprend en outre une troisième cavité 71 connectée fluidiquement à une troisième pression, par exemple une pression HP externe, à l'aide d'une troisième communication 27. Préférentiellement, la troisième communication 27 permet que la troisième pression règne dans la troisième cavité 71. La troisième cavité 71 est préférentiellement située dans le creux du corps de vanne 20.

La vanne fluidique 50 comprend en outre un piston 60 ayant une première partie 60a et une deuxième partie 60b. La première partie 60a étant fixée au membre de vanne 5 dans la deuxième cavité 2. La deuxième partie 60b est située au moins partiellement dans la troisième cavité 71. Préférentiellement, la première partie 60a du piston 60 est plus large que la deuxième partie 60b du piston 60. Préférentiellement, le piston 60 coulisse dans une cinquième communication 29 entre la deuxième 2 et la troisième 71 cavités. Le piston 60 est préférentiellement immergé.

Dans un mode de réalisation de l'invention, la première partie 60a du piston 60 est fixée au membre de vanne 50 autour d'une deuxième ouverture du trou longitudinal 46 et est percées de canaux 61 mettant en communication fluidique la deuxième cavité 2 et le trou longitudinal 46. Cela permet que les forces résultant des pressions sur le piston soient alignées avec le déplacement gauche-droite du membre de vanne 5 et que la pression régnant dans la deuxième cavité 2 règne aussi dans le trou longitudinal 46.

La deuxième partie 60b du piston 60 présente une partie de surface au moins partiellement perpendiculaire à la direction de coulissement du piston 60. Cette partie de surface est située dans la troisième cavité et fait face à une direction opposée à la direction de la deuxième cavité. En d'autres termes, cette partie de surface est agencée pour que le piston 60 puisse être poussé vers la deuxième cavité 2 par la pression régnant dans la troisième cavité 71.

Dans un mode de réalisation de l'invention, la vanne fluidique 50 comprend en outre une quatrième cavité 72, située préférentiellement dans le creux du corps de vanne 20. La quatrième cavité 72 est connectée fluidiquement à la première cavité 1 par un conduit 47 dans lequel une partie du pilote 41 peut coulisser. Préférentiellement, la quatrième cavité 72 est connectée fluidiquement à une quatrième pression, par exemple une pression BP externe, à l'aide d'une quatrième communication 28. Préférentiellement, la quatrième communication 28 permet que la quatrième pression règne dans la quatrième cavité 72.

Dans un mode de réalisation de l'invention, la vanne fluidique 50 comprend un ressort 9 reliant le pilote 41 à une paroi située à l'opposé du pilote 41 par rapport au membre de vanne 5. Par exemple, le ressort 9 peut relier le pilote 41 à une paroi de la quatrième cavité 72. Par exemple, le ressort 9 peut relier le pilote 41 à une paroi du creux du corps de vanne 20.

Selon un mode de réalisation, la vanne fluidique 50 peut fonctionner de la manière suivante.

Au niveau de la première cavité 1, lorsqu'un actionnement électrique déplace le pilote 41 vers la gauche la première ouverture du conduit longitudinal 46, dans lequel règne la pression BP, est davantage obturée. La pression dans la première cavité 1 augmente alors, grâce à la première communication 21. Cette augmentation de pression augmente la force qui pousse le membre de vanne 5 vers la gauche.

Inversement, au niveau de la première cavité 1, lorsqu'un actionnement électrique déplace le pilote 41 vers la droite, la première ouverture du conduit longitudinal 46, dans lequel règne la pression BP, est moins obturée. La pression dans la première cavité 1 diminue alors. Cette diminution de pression diminue la force qui pousse le membre de vanne 5 vers la gauche.

Au niveau de la deuxième cavité 2, la force poussant le membre de vanne 5 vers la droite provient (i) de la force due à la pression HP régnant dans la troisième cavité 71 et s'exerçant sur la deuxième partie 60b du piston 60, et (ii) de la force due à la pression BP régnant dans la deuxième cavité 2 et s'exerçant sur la première partie 60a du piston 60 et sur le membre de vanne 5.

La position du membre de vanne 5 est ainsi déterminée par l'équilibre entre les forces s'exerçant vers la gauche au niveau de la première cavité 1 et vers la droite au niveau de la deuxième cavité 2.

Il est particulièrement intéressant que la première communication 21 et la troisième communication 27 soient connectées à une même pression externe, car si cette dernière change, les pressions dans la première cavité 1 et la troisième cavité 71 changent dans le même sens. Ainsi, les forces vers la gauche et droite augmentent aussi dans le même sens et la position du membre de vanne 5 n'est que peu influencée par cette augmentation de pression externe.

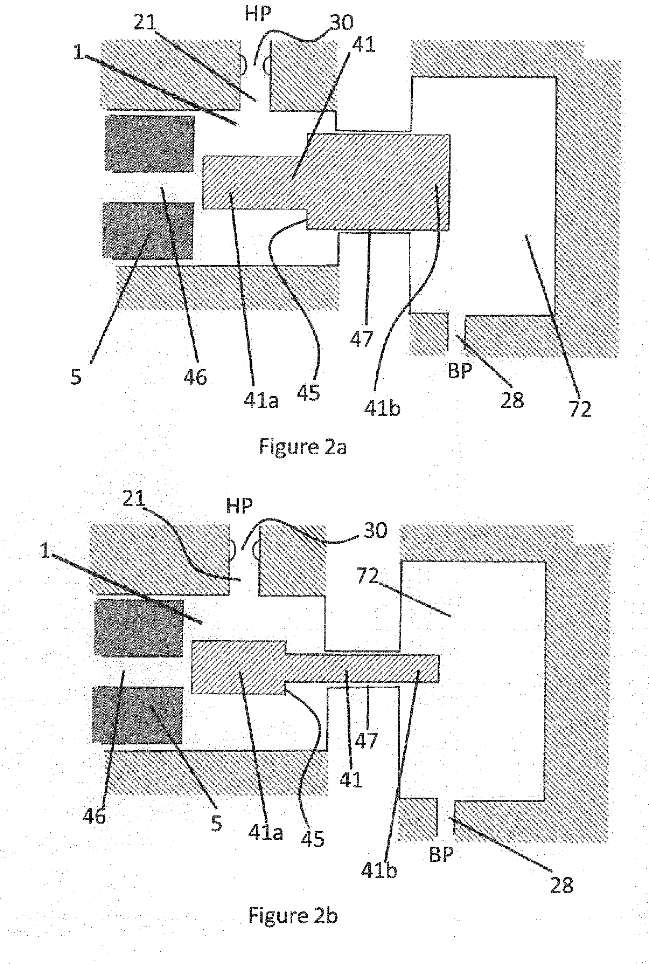

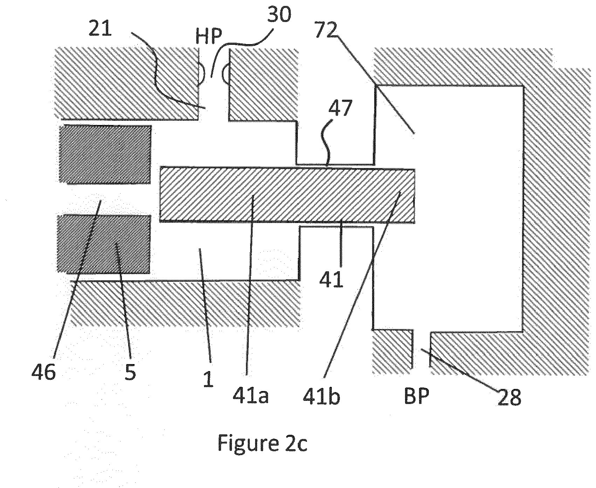

La figure 2a illustre le pilote 41 selon un premier mode de réalisation du pilote 41. La figure 2b illustre le pilote 41 selon un deuxième mode de réalisation du pilote 41. La figure 2c illustre le pilote 41 selon un troisième mode de réalisation du pilote 41. Ces trois modes de réalisation du pilote 41 peuvent être implémentés dans une vanne fluidique 50 selon un mode de réalisation de l'invention. Ces trois modes de réalisation du pilote 41 peuvent être implémentés dans une autre vanne fluidique 50, par exemple une vanne fluidique à rétroaction mécanique, une vanne fluidique à rétroaction hydraulique ou tout autre type de vanne fluidique. Par exemple, les trois modes de réalisation du pilote 41 décrits ici sont compatibles avec les vannes fluidiques décrites dans la demande de brevet EP16179250 intitulée "vanne fluidique".

Selon le premier mode de réalisation du pilote 41, illustré à la figure 2a, le pilote 41 comprend une première partie 41a située au moins partiellement dans la première cavité 1 et une deuxième partie 41b située partiellement dans la première cavité 1, partiellement dans le conduit 47 et partiellement dans la quatrième cavité 72. La première partie 41a est préférentiellement plus étroite que la deuxième partie 41b. Ainsi, le pilote 41 comprend dans la première cavité 1 une surface 45 orientée vers le membre de vanne 5. La pression régnant dans la première cavité 1 pousse sur cette surface 45 en direction opposée du membre de vanne 5, en s'opposant à la fermeture de la première ouverture du conduit longitudinal 46. En d'autres termes, le pilote 41 selon le premier mode de réalisation du pilote 41 est agencé pour subir de la part d'un fluide présent dans la première cavité 1 une force dirigée vers la quatrième cavité 72, c'est-à-dire en direction opposée au membre de vanne 5. Préférentiellement, la première partie 41a est apte à obturer au moins partiellement la première ouverture du trou longitudinal 46.

Ainsi, si le pilote 41 se déplace vers la gauche pour fermer davantage la première ouverture du conduit longitudinal 46, la pression dans la première cavité 1 augmente et la force s'exerçant vers la droite sur la surface 45 du pilote 41 aussi. Par conséquent, un déplacement du pilote 41 induit une variation de pression dans la première cavité 1 créant sur le pilote 41 une force de sens opposé audit déplacement. La vanne fluidique comprenant le pilote 41 selon le premier mode de réalisation du pilote 41 est donc particulièrement stable.

Selon le deuxième mode de réalisation du pilote 41, illustré à la figure 2b, le pilote 41 comprend une première partie 41a située au moins partiellement dans la première cavité 1 et une deuxième partie 41b située partiellement dans la première cavité 1, partiellement dans le conduit 47 et partiellement dans la quatrième cavité 72. La première partie 41a est préférentiellement plus large que la deuxième partie 41b. Ainsi, le pilote 41 comprend dans la première cavité 1 une surface 45 orientée à l'opposé du membre de vanne 5. La pression régnant dans la première cavité 1 pousse sur cette surface 45 en direction du membre de vanne 5, en favorisant la fermeture de la première ouverture du conduit longitudinal 46. En d'autres termes, le pilote 41 selon le deuxième mode de réalisation du pilote 41 est agencé pour subir de la part d'un fluide présent dans la première cavité 1 une force dirigée vers le membre de vanne 5. Préférentiellement, la première partie 41a est apte à obturer au moins partiellement la première ouverture du trou longitudinal 46.

Ainsi, si le pilote 41 se déplace vers la gauche pour fermer davantage la première ouverture du conduit longitudinal 46, la pression dans la première cavité 1 augmente et la force s'exerçant vers la gauche sur la surface 45 du pilote 41 aussi. Par conséquent, un déplacement du pilote 41 induit une variation de pression dans la première cavité 1 créant sur le pilote 41 une force dans le sens dudit déplacement. La vanne fluidique comprenant le pilote 41 selon le deuxième mode de réalisation du pilote 41 est donc particulièrement réactive et peut être dite "instable".

Selon le troisième mode de réalisation du pilote 41, illustré à la figure 2c, le pilote 41 ne comprend pas plusieurs parties de différents diamètres se rejoignant dans la première cavité 1. La pression régnant dans la première cavité 1 n'a donc pas de grande influence sur le déplacement du pilote 41. En d'autres termes, le pilote 41 selon le troisième mode de réalisation du pilote 41 est agencé pour ne pas subir de la part d'un fluide présent dans la première cavité 1 de force dirigée vers le membre de vanne 5 ou à l'opposé du membre de vanne 5.

Ainsi, si le pilote 41 se déplace vers la gauche pour fermer davantage la première ouverture du conduit longitudinal 46, la pression dans la première cavité 1 augmente mais la force de pression s'exerçant vers la gauche ou la droite sur le pilote 41 ne change pas de manière significative. La vanne fluidique comprenant le pilote 41 selon le troisième mode de réalisation du pilote 41 est donc particulièrement équilibrée.

Les trois modes de réalisation du pilote 41 illustrés ne sont que des exemples, et l'homme du métier comprendrait que la forme du pilote 41 et l'agencement de celui-ci dans la vanne fluidique 50 peut être différente pour obtenir l'effet désiré de stabilité (premier mode de réalisation du pilote 41), d'instabilité (deuxième mode de réalisation du pilote 41), ou d'équilibre (troisième mode de réalisation du pilote 41).

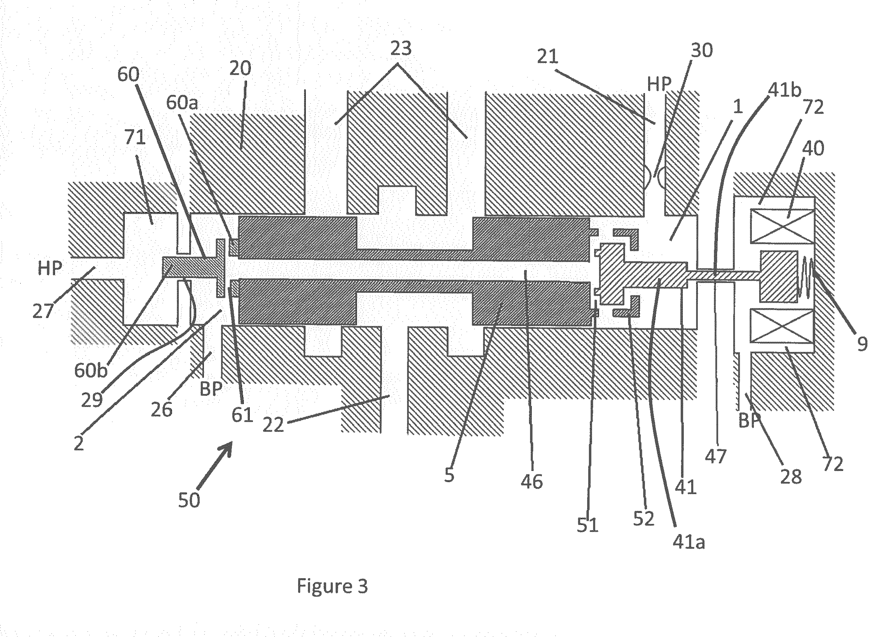

La figure 3 est une vue en coupe d'une vanne fluidique 50 selon un mode de réalisation possible de l'invention. Selon ce mode de réalisation, la vanne fluidique 50 comprend un pilote 41 selon le deuxième mode de réalisation du pilote 41.

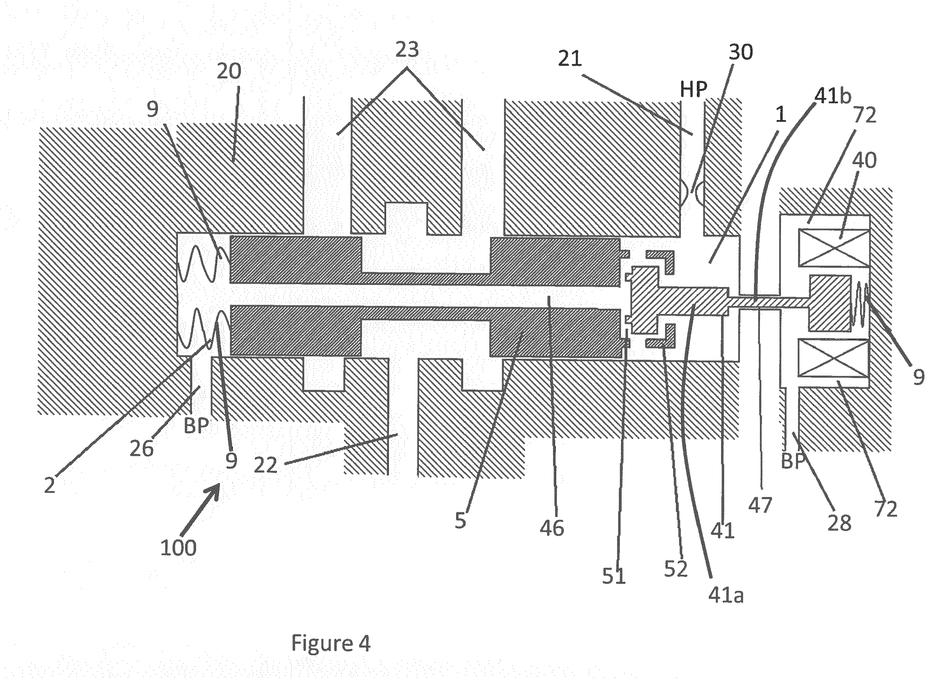

La figure 4 est une vue en coupe d'une vanne fluidique 100 à rétroaction mécanique. La vanne fluidique 100 à rétroaction mécanique illustrée comprend un pilote 41 selon le deuxième mode de réalisation du pilote 41.

En d'autres termes, l'invention se rapporte à concerne une vanne fluidique 50 comprenant un membre de vanne 5 situé entre une première 1 et une deuxième 2 cavités et un actionneur 40 comprenant un pilote 41. Le membre de vanne 5 se déplace grâce à l'équilibre entre les pressions régnant dans les première 1 et deuxième 2 cavités. Le membre de vanne 5 comprend un trou longitudinal 46 qui peut être obstrué par le pilote 41, de façon à modifier la pression régnant dans la première cavité 1 et la force s'exerçant vers la gauche sur le membre de vanne 5. Le membre de vanne 5 est fixé à un piston 60 dont une extrémité est située dans une troisième cavité 71. La force s'exerçant sur le membre de vanne 5 est déterminée par les pressions régnant dans les différentes cavités.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Vanne fluidique (50) pour un circuit hydraulique d'un équipement d'un aéronef et comprenant :
- un corps de vanne (20) creux comprenant une entrée (22), deux sorties (23) et une première communication (21) vers une première pression;
- une restriction fixe (30) dans ladite première communication (21),
- un actionneur (40) situé au moins partiellement dans le creux du corps de vanne (20) creux et comprenant un pilote (41) mobile;
- un membre de vanne (5) mobile dans le corps de vanne (20) pour obturer au moins partiellement un passage entre ladite entrée (22) et une des deux sorties (23), ledit membre de vanne (5) définissant au moins partiellement une première (1) et une deuxième (2) cavités situées de part et d'autre dudit membre de vanne (5) dans le creux du corps de vanne (20),
- une troisième cavité (71),
- un piston (60) ayant une première partie (60a) et une deuxième partie (60b), la première partie (60a) étant dans la deuxième cavité (2),
ledit membre de vanne (5) comprenant un trou longitudinal (46),
ledit pilote (41) étant apte à obturer au moins partiellement une première ouverture dudit trou longitudinal (46),
la deuxième cavité (2) étant prévue pour être connectée fluidiquement à une deuxième pression à l'aide d'une deuxième communication (26),
**caractérisée en ce que**:
• le trou longitudinal (46) met en communication lesdites première (1) et deuxième (2) cavités lorsqu'il n'est pas obturé, la troisième cavité (71) a une communication (27) pour la connecter fluidiquement à une troisième pression,
• le piston (60) est mécaniquement couplé au membre de vanne (5), et
• la deuxième partie (60b) du piston (60) est située au moins partiellement dans la troisième cavité (71) et a une partie de surface située dans la troisième cavité (71), faisant face à une direction opposée à la direction de la deuxième cavité (2) et au moins partiellement perpendiculaire à une direction de déplacement du piston (60), de sorte qu'un déplacement dudit pilote (41) mobile induise une variation de pression dans la première cavité (1) pour créer une force de déplacement sur ledit membre de vanne (5) pour faire varier un débit de fluide entre l'entrée (22) et les deux sorties (23).

2. Vanne fluidique (50) selon la revendication précédente, **caractérisée en ce que** le piston (60) comprend un canal (61) pour mettre en communication fluidique la deuxième cavité (2) et le trou longitudinal (46) du membre de vanne (5).

3. Vanne fluidique (50) selon l'une quelconque des revendications précédentes, **caractérisée en ce que** la troisième cavité (71) est située dans le creux du corps de vanne (20).

4. Vanne fluidique (50) selon l'une quelconque des revendications précédentes, **caractérisée en ce que** l'actionneur (40) est un actionneur électrique solénoïde et le pilote (41) est ferromagnétique.

5. Vanne fluidique (50) selon l'une quelconque des revendications précédentes, **caractérisée en ce que** le membre de vanne (5) comprend un évidement (51) recevant une partie du pilote (41), une paroi (52) dudit évidement (51) étant agencée pour limiter au moins partiellement un déplacement du pilote (41).

6. Vanne fluidique (50) selon la revendication précédente, **caractérisée en ce que** la paroi (52) et le pilote (41) sont agencés pour qu'un déplacement dudit pilote (41) vers une direction opposée à la deuxième cavité (2) puisse entraîner mécaniquement un déplacement du membre de vanne (5).

7. Vanne fluidique (50) selon l'une quelconque des revendications précédentes, **caractérisée en ce que** la vanne fluidique (50) comprend un ressort (9) reliant ledit pilote (41) à une paroi située à l'opposé dudit pilote (41) par rapport au membre de vanne (5).

8. Vanne fluidique (50) selon l'une quelconque des revendications précédentes, **caractérisée en ce que** le pilote (41) est prévu pour coulisser dans un conduit (47) permettant de mettre en communication fluidique la première (1) et une quatrième (72) cavités.

9. Vanne fluidique (50) selon la revendication 8, **caractérisée en ce que** le pilote (41) comprend une première partie (41a) située au moins partiellement dans la première cavité (1) et une deuxième partie (41b) située partiellement dans la première cavité (1) et partiellement dans le conduit (47) et **en ce que** la première partie (41a) est plus étroite que la deuxième partie (41b).

10. Vanne fluidique (50) selon la revendication 8, **caractérisée en ce que** le pilote (41) comprend une première partie (41a) située au moins partiellement dans la première cavité (1) et une deuxième partie (41b) située partiellement dans la première cavité (1) et partiellement dans le conduit (47) et **en ce que** la première partie (41a) est plus large que la deuxième partie (41b).

11. Vanne fluidique (50) selon la revendication 8, **caractérisée en ce que** le pilote (41) ne comprend pas plusieurs parties de différents diamètres se rejoignant dans la première cavité (1).

12. Circuit hydraulique d'un équipement d'un aéronef comprenant une vanne fluidique (50) selon l'une quelconque des revendications précédentes.

13. Système de pile à combustible comprenant une vanne fluidique (50) selon l'une quelconque des revendications 1 à 11.

14. Turbomachine d'aéronef comprenant une vanne fluidique (50) selon l'une quelconque des revendications 1 à 11.

15. Aéronef comportant une vanne fluidique (50) selon l'une quelconque des revendications 1 à 11.

## Patentansprüche

1. Fluidisches Absperrorgan (50) für einen Hydraulikkreislauf einer Ausrüstung eines Luftfahrzeugs und umfassend:
- einen hohlen Absperrorgankörper (20) einen Eingang (22), zwei Ausgänge (23) und eine erste Kommunikation (21) zu einem ersten Druck umfassend;
- eine feste Beschränkung (30) in der ersten Kommunikation (21),
- einen Aktuator (40), der sich mindestens teilweise in dem Hohlraum des hohlen Absperrorgankörpers (20) befindet und einen mobilen Treiber (41) umfassend;
- ein mobiles Absperrorganelement (5) in dem Absperrorgankörper (20), um mindestens teilweise einen Durchgang zwischen dem Eingang (22) und einem der beiden Ausgänge (23) zu verschließen, wobei das Absperrorganelement (5) mindestens teilweise einen ersten (1) und einen zweiten (2) Hohlraum definiert, die sich beiderseits des Absperrorganelements (5) in der Aushöhlung des Absperrorgankörpers (20) befinden,
- einen dritten Hohlraum (71),
- einen Kolben (60), der einen ersten Abschnitt (60a) und einen zweiten Abschnitt (60b) aufweist, wobei der erste Abschnitt (60a) in dem zweiten Hohlraum (2) ist,
wobei das Absperrorganelement (5) ein Längsloch (46) umfasst,
wobei der Treiber (41) geeignet ist, mindestens teilweise eine erste Öffnung des Längslochs (46) zu verschließen,
wobei der zweite Hohlraum (2) vorgesehen ist, um mithilfe einer zweiten Kommunikation (26) fluidisch mit einem zweiten Druck verbunden zu werden,
**dadurch gekennzeichnet, dass**:
• das Längsloch (46) den ersten (1) und den zweiten (2) Hohlraum in Kommunikation bringt, wenn es nicht verschlossen ist, wobei der dritte Hohlraum (71) eine Kommunikation (27) aufweist, um sie fluidisch mit einem dritten Druck zu verbinden,
• der Kolben (60) mechanisch an das Absperrorganelement (5) gekoppelt ist, und
• sich der zweite Abschnitt (60b) des Kolbens (60) mindestens teilweise in dem dritten Hohlraum (71) befindet und ein Oberflächenteil aufweist, das sich in dem dritten Hohlraum (71) befindet, einer Richtung entgegengesetzt zu der Richtung des zweiten Hohlraums (2) zugewendet ist, und mindestens teilweise senkrecht zu einer Verschieberichtung des Kolbens (60), sodass eine Verschiebung des mobilen Treibers (41) eine Druckvariation in dem ersten Hohlraum (1) bewirkt, um eine Verschiebekraft auf dem Absperrorganelement (5) zu erzeugen, um einen Durchflussstrom eines Fluids zwischen dem Eingang (22) und den beiden Ausgängen (23) variieren zu lassen.

2. Fluidisches Absperrorgan (50) nach dem vorstehenden Anspruch, **dadurch gekennzeichnet, dass** der Kolben (60) einen Kanal (61) umfasst, um den zweiten Hohlraum (2) und das Längsloch (46) des Absperrorganelements (5) in fluidische Kommunikation zu bringen.

3. Fluidisches Absperrorgan (50) nach einem der vorstehenden Ansprüche, **dadurch gekennzeichnet, dass** sich der dritte Hohlraum (71) in der Aushöhlung des Absperrorgankörpers (20) befindet.

4. Fluidisches Absperrorgan (50) nach einem der vorstehenden Ansprüche, **dadurch gekennzeichnet, dass** der Aktuator (40) ein elektrischer Magnetaktuator ist und der Treiber (41) ferromagnetisch ist.

5. Fluidisches Absperrorgan (50) nach einem der vorstehenden Ansprüche, **dadurch gekennzeichnet, dass** das Absperrorganelement (5) eine Ausnehmung (51) umfasst, die einen Teil des Treibers (41) aufnimmt, wobei eine Wand (52) der Ausnehmung (51) angeordnet ist, um mindestens teilweise eine Verschiebung des Treibers (41) einzugrenzen.

6. Fluidisches Absperrorgan (50) nach dem vorstehenden Anspruch, **dadurch gekennzeichnet, dass** die Wand (52) und der Treiber (41) angeordnet sind, damit eine Verschiebung des Treibers (41) in eine entgegengesetzte Richtung zum zweiten Hohlraum (2) eine Verschiebung des Absperrorganelements (5) mechanisch herbeiführen kann.

7. Fluidisches Absperrorgan (50) nach einem der vorstehenden Ansprüche, **dadurch gekennzeichnet, dass** das fluidische Absperrorgan (50) eine Feder (9) umfasst, die den Treiber (41) mit einer Wand verbindet, die sich im Verhältnis zu dem Absperrorganelement (5) entgegengesetzt zu dem Treiber (41) (befindet.

8. Fluidisches Absperrorgan (50) nach einem der vorstehenden Ansprüche, **dadurch gekennzeichnet, dass** der Treiber (41) vorgesehen ist, um in einer Leitung (47) zu gleiten, die es erlaubt, den ersten (1) und einen vierten Hohlraum (72) in fluidische Kommunikation zu bringen.

9. Fluidisches Absperrorgan (50) nach Anspruch 8, **dadurch gekennzeichnet, dass** der Treiber (41) einen ersten Teil (41a) umfasst, der sich mindestens teilweise in dem ersten Hohlraum (1) befindet und einen zweiten Teil (41b), der sich teilweise in dem ersten Hohlraum (1) und teilweise in der Leitung (47) befindet, und dadurch, dass der erste Teil (41a) schmäler ist als der zweite Teil (41b).

10. Fluidisches Absperrorgan (50) nach Anspruch 8, **dadurch gekennzeichnet, dass** der Treiber (41) einen ersten Teil (41a) umfasst, der sich mindestens teilweise in dem ersten Hohlraum (1) befindet, und einen zweiten Teil (41b), der sich teilweise in dem ersten Hohlraum (1) und teilweise in der Leitung (47) befindet, und dadurch, dass der erste Teil (41a) breiter ist als der zweite Teil (41b).

11. Fluidisches Absperrorgan (50) nach Anspruch 8, **dadurch gekennzeichnet, dass** der Treiber (41) nicht mehrere Teile mit unterschiedlichen Durchmessern umfasst, die in dem ersten Hohlraum (1) zusammentreffen.

12. Hydraulikkreislauf einer Ausrüstung eines Luftfahrzeugs, ein fluidisches Absperrorgan (50) nach einem der vorstehenden Ansprüche umfassend.

13. Brennstoffzellensystem, ein fluidisches Absperrorgan (50) nach einem der Ansprüche 1 bis 11 umfassend.

14. Luftfahrzeug-Turbomaschine, ein fluidisches Absperrorgan (50) nach einem der Ansprüche 1 bis 11 umfassend.

15. Luftfahrzeug, ein fluidisches Absperrorgan (50) nach einem der Ansprüche 1 bis 11 umfassend.

## Claims

1. Fluidic valve (50) for a hydraulic circuit of an equipment of an aircraft and comprising:
- a hollow valve body (20) comprising one inlet (22), two outlets (23) and a first communication (21) towards a first pressure;
- a fixed restriction (30) in said first communication (21),
- an actuator (40) located at least partially in the cavity of the hollow valve body (20) and comprising a mobile control (41);
- a valve member (5) moveable in the valve body (20) to block at least partially a passage between said inlet (22) and one of the two outlets (23), said valve member (5) defining at least partially first (1) and second (2) cavities located on either side of said valve member (5) in the cavity of the valve body (20),
- a third cavity (71),
- a piston (60) having a first portion (60a) and a second portion (60b), the first portion (60a) being in the second cavity (2),
said valve member (5) comprising a longitudinal hole (46),
said control (41) being capable of blocking at least partially a first opening of said longitudinal hole (46),
the second cavity (2) being arranged to be fluidically connected to a second pressure using a second communication (26),
**characterised in that**:
• the longitudinal hole (46) establishes a communication between said first (1) and second (2) cavities when it is not blocked, the third cavity (71) has a communication (27) to fluidically connect it to a third pressure,
• the piston (60) is mechanically coupled to the valve member (5), and
• the second portion (60b) of the piston (60) is located at least partially in the third cavity (71) and a surface portion located in the third cavity (71), facing a direction opposite the direction of the second cavity (2) and at least partially perpendicular to a direction of movement of the piston (60), such that a movement of said mobile control (41) induces a variation in pressure in the first cavity (1) to create a movement force on said valve member (5) to vary a fluid flow rate between the inlet (22) and the two outlets (23).

2. Fluidic valve (50) according to the preceding claim, **characterised in that** the piston (60) comprises a channel (61) for establishing a fluidic communication between the second cavity (2) and the longitudinal hole (46) of the valve member (5).

3. Fluidic valve (50) according to any of the preceding claims, **characterised in that** the third cavity (71) is located in the cavity of the valve body (20).

4. Fluidic valve (50) according to any of the preceding claims, **characterised in that** the actuator (40) is a solenoid electrical actuator and the control (41) is ferromagnetic.

5. Fluidic valve (50) according to any of the preceding claims, **characterised in that** the valve member (5) comprises a recess (51) receiving a portion of the control (41), a wall (52) of said recess (51) being arranged to limit at least partially a movement of the control (41).

6. Fluidic valve (50) according to the preceding claim, **characterised in that** the wall (52) and the control (41) are arranged such that a movement of said control (41) towards a direction opposite the second cavity (2) can mechanically drive a movement of the valve member (5).

7. Fluidic valve (50) according to any of the preceding claims, **characterised in that** the fluidic valve (50) comprises a spring (9) connecting said control (41) to a wall located opposite said control (41) with respect to the valve member (5).

8. Fluidic valve (50) according to any of the preceding claims, **characterised in that** the control (41) is provided to slide in a duct (47) making it possible to place in fluidic communication, the first (1) and a fourth (72) cavity.

9. Fluidic valve (50) according to claim 8, **characterised in that** the control (41) comprises a first portion (41a) located at least partially in the first cavity (1) and a second portion (41b) located partially in the first cavity (1) and partially in the duct (47) and **in that** the first portion (41a) is narrower than the second portion (41b).

10. Fluidic valve (50) according to claim 8, **characterised in that** the control (41) comprises a first portion (41a) located at least partially in the first cavity (1) and a second portion (41b) located partially in the first cavity (1) and partially in the duct (47) and **in that** the first portion (41a) is wider than the second portion (41b).

11. Fluidic valve (50) according to claim 8, **characterised in that** the control (41) does not comprise several portions of different diameters joining together in the first cavity (1).

12. Hydraulic circuit of of an equipment of an aircraft comprising a fluidic valve (50) according to any of the preceding claims.

13. Fuel cell system comprising a fluidic valve (50) according to any of claims 1 to 11.

14. Aircraft turbomachine comprising a fluidic valve (50) according to any of claims 1 to 11.

15. Aircraft comprising a fluidic valve (50) according to any of claims 1 to 11.
